# EUROPEAN PATENT SPECIFICATION

(11) **EP 2 644 662 B1**
(45) Date of publication and mention of the grant of the patent: **04.05.2016**
(21) Application number: 10812862.0
(22) Date of filing: 25.11.2010
(51) Int. Cl.: C09D 5/00

(54) **HYBRID PHOTOCATALYTIC COATINGS, METHOD FOR APPLYING SAID COATINGS TO DIFFERENT SUBSTRATES AND USES OF THE SUBSTRATES THUS COATED**
PHOTOKATALYTISCHE HYBRIDBESCHICHTUNGEN, VERFAHREN ZUR ANWENDUNG DERARTIGER BESCHICHTUNGEN AUF VERSCHIEDENE SUBSTRATE SOWIE VERWENDUNG SOLCHERART BESCHICHTETER SUBSTRATE
REVÊTEMENTS PHOTOCATALYTIQUES HYBRIDES, PROCÉDÉ POUR LES APPLIQUER SUR DIVERS SUBSTRATS ET UTILISATIONS DES SUBSTRATS AINSI REVÊTUS

(43) Date of publication of application: 02.10.2013
(73) Proprietor: Fundacion Tecnalia Research & Innovation, 48160 Derio (Vizcaya) (ES)
(72) Inventor: DE MIGUEL, Yolanda, Rufina, E-48160 Derio (Vizcaya) (ES); VILLALUENGA ARRANZ, Irune, E-48160 Derio (Vizcaya) (ES); BERRIOZABAL SOLANA, Gemma, E-48160 Derio (Vizcaya) (ES); TENAS RICART, Joaquín, E-48160 Derio (Vizcaya) (ES)
(74) Representative: Carpintero Lopez, Francisco
(86) International application number: PCT/ES2010/070775
(87) International publication number: WO 2012/069672

(56) References cited:
- WO-A1-2008/043396
- WO-A1-2010/122182
- WO-A2-2005/103172
- US-A1- 2005 233 135

## Description

### Field of the Invention

The invention relates to the field of coatings on substrates which are to be protected and kept clean, maintaining their original appearance. The invention particularly relates to inorganic-organic type hybrid photocatalytic coatings, as well as to a process for applying them on substrates of a different nature by means of sol-gel synthesis by using titanium dioxide nanoparticles as a photocatalytic agent. The substrate thus coated is applicable in the construction or environmental field, among others, since it is capable of destroying various contaminants in surfaces, in façades, in water or in air, for example.

### Background of the Invention

As is well known in the state of the art, the existence of surfaces contaminated or sullied both by chemical products or by atmospheric air due to all the contaminants which it is capable of transporting is a widespread problem. This is due to the fact that cleaning building façades, floors, walls, etc., entails a high expense in terms of the material to be used and human intervention.

The possibility of protecting the surface or the environment in which it is located is of great interest in the construction and environmental field. In these cases, the advantages provided by the coatings based on nanoparticles lie in the fact that they allow obtaining coatings that protect and keep clean the surfaces on which they are located.

Most nanoparticles that are used today to achieve these construction and environmental purposes are titanium dioxide (TiO₂) nanoparticles. Since Fujishima and Honda (Fujishima, A.; Honda, K., Nature 1972, 37, 238) discovered the photocatalytic dissociation of water on TiO₂ electrodes in the 1970s decade (Hashimoto K., Irie, H; Fujishima, A., Jpn. J. Appl. Phys. 2005, 44 (12) 8269), the development of a large number of researches based on this photocatalytic semiconductor started. Titanium dioxide is a photosensitive semiconductor, and the valence electrons are excited in the conduction band by means of a radiation energy in the ultraviolet range (200-400 nm) (Balasubramanian G.; Dionysiou D.D.; Suidan M.T., "Titanium Dioxide Coatings on Stainless Steel" Encyclopedia of Nanoscience and Nanotechonology, Marcel Dekker; Schubert U., Husing N., "Synthesis of Inorganic Materials" Wiley-VCH, Weinheim, (2005**)).** The crystallinity of this semiconductor is essential for a good photocatalytic activity. The three most important crystal forms are: anatase, brookite and rutile. The rutile phase is stable at room temperature, unlike the brookite and anatase phases which are metastable; however, the structure having the highest photocatalytic activity is anatase.

One of the most widespread methods used to obtain photocatalytic coatings on different substrates by means of sol-gel methodology is the *in situ* synthesis of the TiO₂ coating. This sol-gel method consists of the hydrolysis and condensation of the organometallic precursor (titanium isopropoxide, titanium tetrachloride, etc.) followed by the deposition (dip-coating, spin-coating, etc.) of the sol on the substrate to be coated. With this synthetic methodology, the coatings are initially usually amorphous, and a calcination step (generally 500ºC or 600ºC) is required to give rise to the anatase phase (the most photoactive crystal structure of TiO₂). This route has the drawback that the coatings are subjected to heat treatments at high temperatures.

Thus, at the end of the 1980s, Takahashi et al. (Takahashi, Y.; Matsuoka, Y. J. Mater. Sci. 1988, 23, 2259) developed one of the first syntheses of TiO₂ coatings which was furthermore based on this *in situ* methodology. To that end, they used diethanolamine (DEA) to control the hydrolysis step of the titanium precursor (titanium isopropoxide) under the addition of water. The presence of ethanolamines gives rise to stable chelates upon reacting with metal alkoxides through the alcohol exchange reaction. There are other chelating agents like inorganic acids, such as hydrochloric acid ((a) Mohammadi, M. R.; Cordero-Cabrera, M. C.; Ghorbani, M.; Fray, D. J. J. Sol-Gel Sci. Techn. 2006, 40, 15.; and (b) Shen, Q. H.; Yang, H.; Gao, J. W.; Yang, J. G. Mater. Lett. 2007, 61, 4160), for example, and organic acids, such as acetic acid ((a) Chen, W.; Zhang, J. Y.; Fang, Q.; Li, S.; Wu, J. X.; Li, F. Q.; Jiang, K. Sensor Actuat. B-Chem. 2004, 100, 195; and (b) Choi, H.; Stathatos, E.; Dionysiou, D. D. Thin Solid Films 2006, 510, 107) or citric acid (Bu, S. J.; Jin, Z. G.; Liu, X. X.; Yang, L. R.; Cheng, Z. J. J. Eur. Ceram. Soc. 2005, 25, 673), for example. Although these agents can cause acid corrosion on sensitive metal substrates such as steel or aluminium, the synthesis described by Takahashi et al. generates stable sols, preventing acid conditions which can be damaging when the substrate used is a metal.

Watanabe et al. used another chelating agent, acetylacetone (Watanabe, T.; Fukayama, S.; Miyauchi, M.; Fujishima, A.; Hashimoto, K. J. Sol-Gel Sci. Techn. 2000, 19, 71) because it has the advantage of providing stable sols at almost neutral pHs to give rise to coatings on any substrate. The complexation of titanium alkoxide with acetylacetone is a good way to prevent rapid hydrolysis/condensation reactions.

On the other hand, there are various studies which use long-chain non-ionic surfactants such as polyethylene glycol (PEG) ((a) Ma, Y.; Yao, J. N. J. Photoch. Photobio. A 1998, 116, 167; (b) Bu et al., **2005** *supra*; (c) Yu, J. G.; Zhao, X. J.; Zhao, Q. N. Thin Solid Films 2000, 379, 7; and (d) Chen, Y.; Dionysiou, D. D. Appl. Catal. A-Gen. 2007, 317, 129) polyethylene glycol derivatives (Diethylene glycol (DEG) (Fretwell, R.; Douglas, P. J. Photoch. Photobio. A 2001, 143, 229), Tween 20 ((a) Choi et al. **2006,** *supra*; and (b) Yu, J. C.; and Yu, J. G.; Zhao, J. C. Appl. Catal. B-Environ. 2002, 36, 31), Triton X-100 (Choi et al, **2006,** *supra;* and Chen, Y. J.; Dionysiou, D. D. Appl. Catal. B-Environ. 2008, 80, 147) as a pore forming agent to increase the photocatalytic activity. The decomposition of PEG or PEG derivatives in the coatings can create macropores formed from a sol-gel associated with PEG-ethanol, which entails a higher photocatalytic activity of the final coating.

Another type of surfactants used as structuring agents for generating mesoporosity in the coating are cationic surfactants (Yusuf, M. M.; Imai, H.; Hirashima, H. J. Sol-Gel Sci. Techn. 2002, 25, 65), diblock ((a) Hwang, Y. K.; Lee, K. C.; Kwon, Y. U. Chem. Commun. 2001, 1738; and (b) Cheng, Y. J.; Gutmann, J. S. J. Am. Chem. Soc. 2006, 128, 4658) or triblock copolymers ((a) Bosc, F.; Ayral, A.; Albouy, P. A.; Guizard, C. Chem. Mater. 2003, 15, 2463; (b) Liu, K. S.; Zhang, M. L.; Zhou, W.; Li, L.; Wang, J.; Fu, H. G. Nanotechnology 2005, 16, 3006; (c) Allain, E.; Besson, S.; Durand, C.; Moreau, M.; Gacoin, T.; Boilot, J. P. Adv. Funct. Mater. 2007, 17, 549; and (d) Tschirch, J.; Bahnemann, D.; Wark, M.; Rathousky, J. J. Photoch. Photobio. A 2008, 194, 181) which give rise to dense and stable sols with which the substrates can be coated, generating uniform photocatalytic TiO₂ coatings after a heat treatment.

As has been mentioned above, one of the greatest drawbacks caused by the *in situ* synthesis of TiO₂ coatings is the diffusion of ions in the surface of the substrate due to the heat treatments necessary for obtaining the anatase phase and for giving rise to good adhesion properties. Thus, Fernández et al. observed that when the substrate to be coated is a metal, such as stainless steel for example, the diffusion of Fe³⁺ and Cr³ ions in the surface occurs as a consequence of the heat treatments (Fernández, A.; Lassaletta, G.; Jiménez, V.M; Justo, A.; González-Elipe, A.R.; Herrmann, J.M.; Tahiri, H.; Ait-Ichou, Y. Appl. Catal. B-Environ. 1995, 7, 49). These heterocations generate a recombination of electron-hole centers, giving rise to a reduction in the photocatalytic activity of the coating. Therefore, this synthetic methodology is not the most suitable when metals are used as substrates to be coated.

There are other synthetic methods for obtaining photocatalytic coatings in which the TiO₂ nanoparticles are first synthesized and are subsequently deposited on the substrate, such that heat treatments are avoided. Thus, Peiró et al. (Peiró, A. M., Peral. J, Domingo, C., Domenéch, X., Appl. Catal. B-Environ. 2001, 30, 359-373) obtained coatings with TiO₂ nanoparticles (anatase crystal phase) synthesized from the hydrolysis of titanium tetrakis (isopropoxide).

A very common methodology for obtaining coatings using previouslyr synthesized nanoparticles is layer-by-layer deposition. Thus, Sánchez et al. (Sanchez, B.; Coronado, J. M.; Caudal, R.; Portela, R.; Tejedor, I.; Anderson, M. A.; Tompkins, D.; Lee, T. Appl. Catal. B-Environ. 2006, 66, 295) developed photocatalytic coatings on PET substrates, based on the assembly of different layers from oppositely charged nanoparticles in suspension. By means of this methodology, coatings on substrates sensitive to high temperatures such as metals, textiles, PET, etc. can be obtained since heat treatments at high temperatures after the deposition to induce the crystallinity of TiO₂ are not required. However, it should be emphasized that the electrostatic interaction between the layers is ocassionally not sufficient (Lee, D.; Rubner, M. F.; Cohen, R. E. Nano. Lett. 2006, 6, 2305) to give rise to a good adhesion.

Therefore, taking into account all the drawbacks of the previously described synthetic methods, new routes based on the sol-gel synthesis of inorganic-organic hybrids for obtaining photocatalytic coatings have been developed in recent years. Thus, patent EP 1069950 B1 proposed a photocatalytic composition obtained by means of adding commercial TiO2 nanoparticles to a commercial aqueous colloidal dispersion of silicon dioxide for its possible use as a paint or filter coating. Likewise, Yuranova et al. (Yuranova et al., Journal of Molecular Catalysis A: chemical 244 (2006) 160-167) obtained hybrid photocatalytic coatings on textiles also using a commercial colloidal suspension of nanosilica which was mixed with a previously synthesized suspension of TiO2 nanoparticles, before applying this mixture and then carrying out the curing thereof at low temperatures (100ºC, 1 hour). However, the Ti02 nanoparticles of the coating obtained had a low cristallinity and a poor photocatalytic activity.

Another example based on hybrid coatings is the work conducted by Park et al. (Park et al., Material Science Forum Vols. 544-545 (2007) pp. 127-130) in which they obtained hybrid photocatalytic coatings on stainless steel from a silica binder which consisted of methyltrimethoxysilane, an acid catalyst and isopropyl alcohol, and which was mixed with a commercial suspension of TiO₂ before said mixture was applied on the steel and then carrying out the curing of the coating obtained at 200ºC for 1 day. Although the photocatalytic properties and the adhesion were relatively good, the curing times were excessively long.

Likewise, the study carried out by Textor et al. (Textor et al., Macromol. Symp. 2007, 254, 196-202) on hybrid coatings with photocatalytic properties in textiles should be emphasized. The synthesis consisted of mixing an organosilane with TiO₂ nanoparticles and then adding 1-methlylimidazole as a catalyst; then applying said mixture on the textile fibers; and treating the coated fibers at 110ºC for 1 hour. However, the photocatalytic activity of this coating was relatively low.

Therefore, taking into account the multiple researches conducted, obtaining good adhesions without heat treatments at high temperatures is without a doubt one of the greatest problems today in obtaining photocatalytic coatings on substrates sensitive to temperature.

Thus, there is still a need in the state of the art for alternative photocatalytic coatings which have good photocatalytic and adhesion properties for the application on all types of substrates at low temperatures.

Two of the researchers of the present research group have recently proposed (WO 2010/122182) a method for obtaining hybrid photocatalytic coatings by means of the sol-gel route in mild synthesis conditions from a particular percentage of commercial crystalline TiO₂ nanoparticles in the anatase phase using a polyether amine type catalyst.

Surprisingly, the present inventors have now discovered that alternative photocatalytic coatings can be obtained on various substrates, metal substrates or others, can be obtained by using a completely different catalyst consisting of nanoparticles of an inorganic oxide such as silicon oxide or titanium oxide previously functionalized with determined functional groups, also in mild synthesis conditions.

Thus, the process of the invention, by means of sol-gel synthesis of inorganic-organic hybrids in which this particular catalyst is used, allows applying photocatalytic coatings on different substrates in milder synthesis conditions in terms of temperature and solvents. This is especially advantageous in the case of coating metal substrates, for example, since the diffusion of ions in the metal substrate to be coated, as well as the oxidation thereof are prevented upon working at low temperatures. Furthermore, the costs are lower and if the coating mixture is applied by means of immersion, it allows coating large surfaces in addition to reducing the equipment costs.

The coatings thus obtained, therefore, have acceptable photocatalytic and adhesion properties, maintaining at the same time the intrinsic properties of the substrate coated therewith.

Furthermore, in the event of using suspensions of synthetically obtained TiO₂ nanoparticles in the process of the invention, photocatalytic coatings are obtained in mild synthesis conditions with good optical properties in terms of transparency.

### Object of the Invention

Therefore, the object of the present invention is to provide a photocatalytic coating.

Another object of the present invention is to provide a process for applying said photocatalytic coating on a substrate.

Finally, another object of the invention is to provide the use of said coated substrate.

### Description of the Drawings

Figure 1 shows the images obtained by means of energy-dispersive X-ray (EDAX) microanalysis of a coating according to the invention which comprises synthetic titanium dioxide nanoparticles and silicon dioxide nanoparticles functionalized with an aminopropyl group.
Figure 2 shows the images obtained by means of field emission scanning electron microscopy (FE-SEM) of a coating according to the invention which comprises synthetic titanium dioxide nanoparticles and silicon dioxide nanoparticles functionalized with an aminopropyl group.
Figure 3 shows the images obtained by means of energy-dispersive X-ray (EDAX) microanalysis of a coating according to the invention which comprises commercial titanium dioxide nanoparticles and silicon dioxide nanoparticles functionalized with an aminopropyl group.
Figure 4 shows the images obtained by means of field emission scanning electron microscopy (FE-SEM) of a coating according to the invention which comprises commercial titanium dioxide nanoparticles and silicon dioxide nanoparticles functionalized with an aminopropyl group.
Figure 5 shows the images obtained by means of environmental scanning electron microscopy (E-SEM) of a coating according to the invention which comprises commercial titanium dioxide nanoparticles and silicon dioxide nanoparticles functionalized with an aminopropyl group.
Figure 6 shows the images obtained by means of energy-dispersive X-ray (EDAX) microanalysis of a coating according to the invention which comprises commercial titanium dioxide nanoparticles and silicon dioxide nanoparticles functionalized with an aminopropyl group.
Figure 7 shows the images obtained by means of environmental scanning electron microscopy (E-SEM) of a coating according to the invention which comprises synthetic titanium dioxide nanoparticles and titanium dioxide nanoparticles functionalized with an aminopropyl group.
Figure 8 shows the images obtained by means of energy-dispersive X-ray (EDAX) microanalysis of a coating according to the invention which comprises synthetic titanium dioxide nanoparticles and titanium dioxide nanoparticles functionalized with an aminopropyl group.
Figure 9 shows the images obtained by means of environmental scanning electron microscopy (E-SEM) of a coating according to the invention which comprises synthetic titanium dioxide nanoparticles, titanium dioxide nanoparticles functionalized with an aminopropyl group and titanium dioxide nanoparticles functionalized with a carboxypropyl group.
Figure 10 shows the images obtained by means of energy-dispersive X-ray (EDAX) microanalysis of a coating according to the invention which comprises synthetic titanium dioxide nanoparticles, titanium dioxide nanoparticles functionalized with an aminopropyl group and titanium dioxide nanoparticles functionalized with a carboxypropyl group.
Figure 11 shows the images obtained by means of environmental scanning electron microscopy (E-SEM) of a coating according to the invention which comprises commercial titanium dioxide nanoparticles, titanium dioxide nanoparticles functionalized with an aminopropyl group and titanium dioxide nanoparticles functionalized with a carboxypropyl group.
Figure 12 shows the images obtained by means of energy-dispersive X-ray (EDAX) microanalysis of a coating according to the invention which comprises commercial titanium dioxide nanoparticles, titanium dioxide nanoparticles functionalized with an aminopropyl group and titanium dioxide nanoparticles functionalized with a carboxypropyl group.
Figure 13 shows the images obtained by means of environmental scanning electron microscopy (E-SEM) of a coating according to the invention which comprises synthetic titanium dioxide nanoparticles and titanium dioxide nanoparticles functionalized with a methacryloxypropyl group.
Figure 14 shows the images obtained by means of energy-dispersive X-ray (EDAX) microanalysis of a coating according to the invention which comprises synthetic titanium dioxide nanoparticles and titanium dioxide nanoparticles functionalized with a methacryloxypropyl group.

### Detailed Description of the Invention

The present invention provides a photocatalytic coating comprising titanium dioxide nanoparticles and nanoparticles of an inorganic oxide functionalized with a functional group selected from amine, methacrylate, cyano, acid, isocyanate and alcohol, hereinafter "coating of the invention".

In the context of the invention, the term "photocatalytic coating" refers to a coating which is capable of absorbing light and causing degradation reactions of a large number of contaminants (organics compounds, microorganisms, nitrogen oxides, etc.) on the surface thereof.

In the context of the invention, the term "inorganic oxide" refers to an oxide of an element such as Ti, Si or Zn, or to a mixture of said oxides. These oxides in turn can be doped with elements such as N or Fe, for example.

In a particular embodiment of the coating of the invention, the inorganic oxide is selected from silicon dioxide and titanium dioxide. Thus, in a particular embodiment of the coating of the invention, the inorganic oxide nanoparticles are silicon dioxide nanoparticles. In another particular embodiment of the coating of the invention, the inorganic oxide nanoparticles are titanium dioxide nanoparticles. In a particular embodiment of the coating of the invention, the inorganic oxide nanoparticles are nanoparticles of an inorganic oxide selected from silicon dioxide and titanium dioxide which are functionalized with a functional group selected from amine, methacrylate, cyano, acid, isocyanate and alcohol.

In a particular embodiment of the coating of the invention, the silicon dioxide nanoparticles are functionalized with a functional group selected from amine, methacrylate, cyano, acid, isocyanate and alcohol. In a preferred embodiment, the silicon dioxide nanoparticles are functionalized with an amine group. In an even more preferred embodiment, the silicon dioxide nanoparticles are functionalized with an amino(C₁-C₆)alkyl group, preferably an aminopropyl group.

Thus, in a preferred embodiment, the coating of the invention comprises titanium dioxide nanoparticles and silicon dioxide nanoparticles functionalized with an amine group. In an even more preferred embodiment, the coating of the invention comprises titanium dioxide nanoparticles and silicon dioxide nanoparticles functionalized with an amino(C₁-C₆)alkyl group. In another even more preferred embodiment, the coating of the invention comprises titanium dioxide nanoparticles and silicon dioxide nanoparticles functionalized with an aminopropyl group.

In another particular embodiment, the coating of the invention comprises 0.01-1.21%, preferably 0.01%, by weight of silicon dioxide nanoparticles functionalized with an amine group.

In another particular embodiment of the coating of the invention, the titanium dioxide nanoparticles are functionalized with a functional group selected from amine, methacrylate, cyano, acid, isocyanate and alcohol.

In a preferred embodiment, the titanium dioxide nanoparticles are functionalized with an amine group. In an even more preferred embodiment, the titanium dioxide nanoparticles are functionalized with an amino(C₁-C₆)alkyl group, preferably an aminopropyl group.

In another preferred embodiment, the titanium dioxide nanoparticles are functionalized with a methacrylate group. In an even more preferred embodiment, the titanium dioxide nanoparticles are functionalized with a methacryloxy(C₁-C₆)alkyl group, preferably a methacryloxypropyl group.

In another preferred embodiment, the titanium dioxide nanoparticles are functionalized with a cyano group. In an even more preferred embodiment, the titanium dioxide nanoparticles are functionalized with a cyano(C₁-C₆)alkyl group, preferably a cyanopropyl group.

In another preferred embodiment, the titanium dioxide nanoparticles are functionalized with an acid group. In an even more preferred embodiment, the titanium dioxide nanoparticles are functionalized with a carboxy(C₁-C₆)alkyl group, preferably a carboxypropyl group.

Thus, in a preferred embodiment, the coating of the invention comprises titanium dioxide nanoparticles and titanium dioxide nanoparticles functionalized with an amine group. In an even more preferred embodiment, the coating of the invention comprises titanium dioxide nanoparticles and silicon dioxide nanoparticles functionalized with an amino(C₁-C₆)alkyl group. In another even more preferred embodiment, the coating of the invention comprises titanium dioxide nanoparticles and silicon dioxide nanoparticles functionalized with an aminopropyl group.

In another preferred embodiment, the coating of the invention comprises titanium dioxide nanoparticles and titanium dioxide nanoparticles functionalized with a methacrylate group. In an even more preferred embodiment, the coating of the invention comprises titanium dioxide nanoparticles and silicon dioxide nanoparticles functionalized with a methacryloxy(C₁-C₆)alkyl group. In another even more preferred embodiment, the coating of the invention comprises titanium dioxide nanoparticles and silicon dioxide nanoparticles functionalized with a methacryloxypropyl group.

In another preferred embodiment, the coating of the invention comprises titanium dioxide nanoparticles and titanium dioxide nanoparticles functionalized with a cyano group. In an even more preferred embodiment, the coating of the invention comprises titanium dioxide nanoparticles and silicon dioxide nanoparticles functionalized with a cyano(C₁-C₆)alkyl group. In another even more preferred embodiment, the coating of the invention comprises titanium dioxide nanoparticles and silicon dioxide nanoparticles functionalized with a cyanopropyl group.

In another preferred embodiment, the coating of the invention comprises titanium dioxide nanoparticles and titanium dioxide nanoparticles functionalized with an acid group. In a even more preferred embodiment, titanium dioxide nanoparticles and silicon dioxide nanoparticles functionalized with a carboxy(C₁-C₆)alkyl group. In another even more preferred embodiment, the coating of the invention comprises titanium dioxide nanoparticles and silicon dioxide nanoparticles functionalized with a carboxypropyl group.

In another preferred embodiment, the coating of the invention comprises titanium dioxide nanoparticles and a mixture of functionalized titanium dioxide nanoparticles selected from titanium dioxide nanoparticles functionalized with an amine group, titanium dioxide nanoparticles functionalized with a methacrylate group, titanium dioxide nanoparticles functionalized with a cyano group and titanium dioxide nanoparticles functionalized with an acid group. In an even more preferred embodiment, the coating of the invention comprises titanium dioxide nanoparticles and a mixture of titanium dioxide nanoparticles functionalized with an amine group and titanium dioxide nanoparticles functionalized with an acid group. In an even more preferred embodiment, the coating of the invention comprises titanium dioxide nanoparticles, titanium dioxide nanoparticles functionalized with an amino(C₁-C₆)alkyl group and titanium dioxide nanoparticles functionalized with a carboxy(C₁-C₆)alkyl group. In another even more preferred embodiment, the coating of the invention comprises titanium dioxide nanoparticles, titanium dioxide nanoparticles functionalized with an aminopropyl group and titanium dioxide nanoparticles functionalized with a carboxypropyl group.

In another particular embodiment, the coating of the invention comprises 0.005-0.15%, preferably 0.01%, by weight of titanium dioxide nanoparticles functionalized with an amine group. In another particular embodiment, the coating of the invention comprises 0.1-0.2%, preferably 0.13%, by weight of titanium dioxide nanoparticles functionalized with a methacrylate group. In another particular embodiment, the coating of the invention comprises 0.6-1.7%, preferably 0.7%, by weight of titanium dioxide nanoparticles functionalized with an acid group.

In another aspect, the invention provides a process for applying the previously described photocatalytic coating on a substrate, hereinafter "process of the invention", which comprises the steps of:
(a) preparing a photocatalytic composition which comprises mixing titanium dioxide nanoparticles and nanoparticles of an inorganic oxide functionalized with a functional group selected from amine, methacrylate, cyano, acid, isocyanate and alcohol;
(b) coating the substrate with the composition obtained in (a); and
(c) subjecting the coated substrate to a curing treatment.

In step (a) of the process of the invention, the photocatalytic composition to be applied on the substrate is prepared, for which it is necessary to previously obtain the inorganic oxide nanoparticles functionalized with a functional group selected from amine, methacrylate, cyano, acid, isocyanate and alcohol, hereinafter the "functionalized inorganic oxide nanoparticles".

Thus, in a particular embodiment of the process of the invention, step (a) comprises previously obtaining the functionalized inorganic oxide nanoparticles by means of a process which comprises preparing the nanoparticles of the inorganic oxide and then reacting them with an organosilane that contains a functional group selected from amine, methacrylate, cyano, acid, isocyanate and alcohol.

The preparation of the nanoparticles of the inorganic oxide is carried out by means of any conventional state-of-the-art method, such as the synthesis by the sol-gel route, for example, starting from a suitable organic precursor,.

In a preferred embodiment of the process of the invention, the silicon dioxide nanoparticles functionalized with an amine group are obtained by means of a process which comprises preparing the silicon dioxide nanoparticles; and then reacting them with an organosilane containing an amine functional group.

Thus, for example, the silicon dioxide nanoparticles can be prepared from a suitable organosilane compound such as tetraethoxyxilane, for example. Once the silicon dioxide nanoparticles are obtained, their functionalization is performed by means of reacting them with an organosilane containing the desired functional group. To that end, the silicon dioxide nanoparticles obtained are reacted with an organosilane compound functionalized with a functional group selected from amine, methacrylate, cyano, acid, isocyanate and alcohol.

In another preferred embodiment of the process of the invention, the titanium dioxide nanoparticles functionalized with an amine group are obtained by means of a process which comprises preparing the titanium dioxide nanoparticles; and then reacting them with an organosilane containing an amine functional group.

In another preferred embodiment of the process of the invention, the titanium dioxide nanoparticles functionalized with a methacrylate group are obtained by means of a process which comprises preparing the titanium dioxide nanoparticles; and then reacting them with an organosilane containing a methacrylate functional group.

In another preferred embodiment of the process of the invention, the titanium dioxide nanoparticles functionalized with a cyano group are obtained by means of a process which comprises preparing the titanium dioxide nanoparticles; then reacting them with an organosilane containing a cyano functional group.

In another preferred embodiment of the process of the invention, the titanium dioxide nanoparticles functionalized with an acid group are obtained by means of a process which comprises preparing the titanium dioxide nanoparticles; then reacting them with an organosilane containing a cyano functional group to obtain titanium dioxide nanoparticles functionalized with a cyano group; and subjecting said nanoparticles to hydrolysis.

Thus, for example, the titanium dioxide nanoparticles can be prepared from an organometallic titanium precursor by means of sol-gel synthesis, for example (Mohammadi, M. R.; Cordero-Cabrera, M. C.; Ghorbani, M.; Fray, D. J. J. Sol-Gel Sci. Techn. 2006, 40, 15). Once the titanium dioxide nanoparticles are obtained, their functionalization is performed by means of reacting with an organosilane with the required functional group. Thus, for example, a state-of-the-art aminosilane selected by the person skilled in the art, such as 3-aminopropylsilane for example, can be used to obtain titanium dioxide nanoparticles functionalized with an amine group. Similarly, a state-of-the-art cyanosilane selected by the person skilled in the art, such as 3-cyanopropylsilane for example, can be used to obtain titanium dioxide nanoparticles functionalized with a cyano group. Similarly, a state-of-the-art methacrylate silane selected by the person skilled in the art, such as 3-(trimethoxysilylpropyl) methacrylate for example, can be used to obtain titanium dioxide nanoparticles functionalized with a methacrylate group. In the case of titanium dioxide nanoparticles functionalized with an acid group, they can be obtained from titanium dioxide nanoparticles functionalized with a cyano group which are subsequently subjected to hydrolysis.

The functionalized inorganic oxide nanoparticles thus obtained can be used either in the form of suspension or in the form of powder. Thus, in a particular embodiment of the process of the invention, the functionalized inorganic oxide nanoparticles are mixed in the form of powder with the titanium dioxide nanoparticles. In another particular embodiment of the process of the invention, the functionalized inorganic oxide nanoparticles are mixed in the form of suspension with the titanium dioxide nanoparticles. In a preferred embodiment, the functionalized inorganic oxide nanoparticles are mixed in the form of aqueous suspension with the titanium dioxide nanoparticles.

On the other hand, the titanium dioxide nanoparticles which are mixed with the functionalized inorganic oxide nanoparticles can in turn be titanium dioxide nanoparticles in the form of powder or in the form of suspension.

In a particular embodiment of the process of the invention, the titanium dioxide nanoparticles are added in the form of powder. In another particular embodiment of the process of the invention, the titanium dioxide nanoparticles are added in the form of suspension. Thus, in a preferred embodiment, the titanium dioxide nanoparticles which are added in powder form are powdered commercial nanoparticles. In another preferred embodiment, the titanium dioxide nanoparticles which are added in powder form are nanoparticles obtained from a suspension of synthetically obtained titanium dioxide nanoparticles (hereinafter "synthetic nanoparticles") which is prepared from a suitable organometallic titanium precursor and which is subsequently subjected to drying or another suitable solvent removal technique. In another preferred embodiment, the titanium dioxide nanoparticles are added in the form of suspension of synthetic nanoparticles. In another preferred embodiment, the titanium dioxide nanoparticles are added in the form of suspension of commercial titanium dioxide nanoparticles. Thus, for example, a suspension of synthetic titanium dioxide nanoparticles obtained from titanium tetrakis (isopropoxide) can be used, although any other suitable state-of-the-art organometallic titanium precursor can be used. Likewise, commercial titanium dioxide nanoparticles such as P25 or P90 nanoparticles marketed by Degussa, for example, either in the form of powder or in the form of aqueous suspension, can be used. In both cases, non-doped nanoparticles or nanoparticles doped with an element such as Fe, N, etc. can be used.

In a particular embodiment of the process of the invention, the titanium dioxide nanoparticles are mixed with the functionalized inorganic oxide nanoparticles in a proportion of 0.5-10% by weight with respect to the total weight, i.e., the weight of titanium dioxide nanoparticles, functionalized inorganic oxide nanoparticles and the solvent or solvents used to facilitate the subsequent application thereof on the substrate.

In a particular embodiment, step (a) of the process of the invention comprises the steps of:
(I) obtaining titanium dioxide nanoparticles; and
(II) adding nanoparticles of an inorganic oxide functionalized with a functional group selected from amine, methacrylate, cyano, acid, isocyanate and alcohol to the nanoparticles of (I).

In a preferred embodiment, step (a) of the process of the invention comprises the steps of:
(I) obtaining titanium dioxide nanoparticles in the form of powder; and
(II) adding nanoparticles of an inorganic oxide functionalized with a functional group selected from amine, methacrylate, cyano, acid, isocyanate and alcohol in the form of powder to the nanoparticles of (I).

In another preferred embodiment, step (a) of the process of the invention comprises the steps of:
(I) obtaining titanium dioxide nanoparticles in the form of powder; and
(II) adding nanoparticles of an inorganic oxide functionalized with a functional group selected from amine, methacrylate, cyano, acid, isocyanate and alcohol in the form of suspension to the nanoparticles of (I).

In another preferred embodiment, step (a) of the process of the invention comprises the steps of:
(I) obtaining titanium dioxide nanoparticles in the form of suspension; and
(II) adding nanoparticles of an inorganic oxide functionalized with a functional group selected from amine, methacrylate, cyano, acid, isocyanate and alcohol in the form of powder to the nanoparticles of (I).

In a preferred embodiment, step (a) of the process of the invention comprises the steps of:
(I) obtaining titanium dioxide nanoparticles in the form of suspension; and
(II) adding nanoparticles of an inorganic oxide functionalized with a functional group selected from amine, methacrylate, cyano, acid, isocyanate and alcohol in the form of suspension to the nanoparticles of (I).

Likewise, prior to mixing the titanium dioxide nanoparticles and the functionalized inorganic oxide nanoparticles, a solution of a suitable state-of-the-art organosilane compound can be added to the former. In a particular embodiment of the process of the invention, before mixing the titanium dioxide nanoparticles with the functionalized inorganic oxide nanoparticles, the former are added to a solution of an organosilane compound in a suitable state-of-the-art solvent such as an alcohol (isopropanol, for example) to which water has previously been added such that the organosilane compound is hydrolyzed. In a particular embodiment, the organosilane compound is selected from an epoxysilane, a methacrylate silane, an isocyanate silane, a vinylsilane and an aminosilane. In a preferred embodiment, the organosilane compound is an epoxysilane. The following can be mentioned as an example of state-of-the-art epoxysilanes which can be used in the process of the invention: (3-glycidyloxypropyl)trimethoxysilane, glycidyloxypropyltriethoxysilane; glycidyloxypropylmethyldimethoxysilane; glycidyloxypropylmethyldiethoxysilane and epoxycyclohexylethyltrimethoxysilane. In another preferred embodiment, the organosilane compound is a methacrylate silane. The following can be mentioned as an example of state-of-the-art methacrylate silanes which can be used in the process of the invention: 3-methacryloxypropyltrimethoxysilane and 3-(trimethoxysilyl)propyl acrylate. 3-(triethoxysilyl)propyl isocyanate can be mentioned as an example of state-of-the-art isocyanate silanes which can be used in the process of the invention. Vinyltrimethoxysilane can be mentioned as an example of state-of-the-art vinylsilanes. The following can be mentioned as an example of state-of-the-art aminosilanes which can be used in the process of the invention: 3-aminopropyltriethoxysilane, 3-(2-aminoethytamino)propyltrimethoxysilane and bis[3-(trimethoxysilyl)propyl]amino.

In a particular embodiment of the process of the invention, the percentage of titanium dioxide nanoparticles which are added to the solution of the organosilane compound is 0.5-8% by weight with respect to the total weight of the solution, i.e., of the solution of organosilane compound and titanium dioxide nanoparticles.

In a particular embodiment, step (a) of the process of the invention comprises the steps of:
(I) preparing the solution of a hydrolyzed organosilane compound;
(II) adding titanium dioxide nanoparticles to the solution obtained in (I); and
(III) adding nanoparticles of an inorganic oxide functionalized with a functional group selected from amine, methacrylate, cyano, acid, isocyanate and alcohol to the solution obtained in (III).

In a preferred embodiment, step (a) of the process of the invention comprises the steps of:
(I) preparing the solution of a hydrolyzed organosilane compound;
(II) adding titanium dioxide nanoparticles in the form of powder to the solution obtained in (I); and
(III) adding nanoparticles of an inorganic oxide functionalized with a functional group selected from amine, methacrylate, cyano, acid, isocyanate and alcohol in the form of powder to the solution obtained in (III).

In another preferred embodiment, step (a) of the process of the invention comprises the steps of:
(I) preparing a solution of a hydrolyzed organosilane compound;
(II) adding titanium dioxide nanoparticles in the form of powder to the solution obtained in (I); and
(III) adding a suspension of nanoparticles of an inorganic oxide functionalized with a functional group selected from amine, methacrylate, cyano, acid, isocyanate and alcohol to the solution obtained in (III).

In another preferred embodiment, step (a) of the process of the invention comprises the steps of:
(I) preparing a solution of a hydrolyzed organosilane compound;
(II) adding a suspension of titanium dioxide nanoparticles to the solution obtained in (I); and
(III) adding nanoparticles of an inorganic oxide functionalized with a functional group selected from amine, methacrylate, cyano, acid, isocyanate and alcohol in the form of powder to the solution obtained in (III).

In another preferred embodiment, step (a) of the process of the invention comprises the steps of:
(I) preparing the solution of a hydrolyzed organosilane compound;
(II) adding a suspension of titanium dioxide nanoparticles to the solution obtained in (I); and
(III) adding a suspension of nanoparticles of an inorganic oxide functionalized with a functional group selected from amine, methacrylate, cyano, acid, isocyanate and alcohol to the solution obtained in (III).

In step (b) of the process of the invention, the previously described photocatalytic composition is applied on the substrate to be coated. Thus, any known state-of-the-art application technique such as dip-coating, coil-coating, roll-coating, bar-coating, spray coating, etc., can be used to coat the substrate with the previously described photocatalytic composition.

Finally, in step (c) of the process of the invention, the coated substrate is subjected to a curing treatment for the coating thereon. This treatment is usually necessary to generate a film in a period of time suitable to that of an industrial process. Said curing treatment can be a heat treatment or an ultraviolet ray irradiation treatment.

In the case of heat treatment, the curing temperature is an important factor to be taken into account since it can cause diffusion of ions in the case of a metal substrate, altering the intrinsic properties thereof or even generating the oxidation of the metal. In the process of the invention, this factor has been solved since low curing temperatures are used, obtaining a good adhesion and thus maintaining the intrinsic properties of the metal.

Thus, in a particular embodiment of the process of the invention, in step (c) the coated substrate is subjected to a heat treatment at a temperature of 90-210ºC for a time of 0.5-70 minutes. In a preferred embodiment, in step (c) the coated substrate is subjected to a heat treatment at a temperature of 105ºC for a time of 60 minutes. In another preferred embodiment, the coated substrate is subjected to a heat treatment at a temperature of 166ºC for a time of 1 minute. In another preferred embodiment, the coated substrate is subjected to a heat treatment at a temperature of 170ºC for a time of 30 minutes.

The heat treatment can be carried out by means of any known state-of-the-art technique such as heating in a kiln, in an electric oven, for example.

In another particular embodiment of the process of the invention, in step (c) the coated substrate is subjected to a UV irradiation treatment. Thus, the coated substrate is placed under an ultraviolet light lamp with a maximum wavelength of 365 nanometers for a curing time up to 24 hours.

A hybrid photocatalytic coating with titanium dioxide nanoparticles is thus obtained which has acceptable photocatalytic properties and which can be applied to various sectors including, among others, the construction sector (destruction of contaminants on facades, surfaces, etc.) and the environmental sector (air purification, water purification, etc.). Thus, it can be used to destroy organic contaminants or other contaminants such as nitrogen oxides for example, as well as to destroy microorganisms (bacteria, algae, etc.).

In another aspect of the invention, the use of a substrate coated with a photocatalytic coating as described above in water purification, air purification, self-cleaning or easy cleaning of surfaces such as façades, solar panels, etc., and in preparing or obtaining biocidal surfaces (bactericidal, fungicidal, etc.) is therefore provided.

These coatings are particularly interesting when they are used to coat metal substrates since they have good adhesion and flexibility properties, maintaining the intrinsic properties of the metal upon preventing the diffusion of ions therein and/or its oxidation.

Thus, in a particular embodiment of the process of the invention, the substrate is a metal substrate selected from a metal or a metal alloy, such as stainless steel, galvanized steel, painted steel or aluminium, for example. In a preferred embodiment of the process of the invention, the substrate is stainless steel.

Likewise, the coating of the invention can be applied on other different substrates such as plastic, glass, stone and mortars, concretes, and other cement derivatives. Thus, in another particular embodiment of the process of the invention, the substrate is a glass.

The applicability conditions which allow considering the industrial and commercial interest thereof, particularly in the construction industry, are the following:
- Use of a combination of polymers, organic molecules and organosilanes favoring the adhesion to substrate, particularly to a metal substrate.
- Use of doped or non-doped commercial or synthetic titanium dioxide nanoparticles, in this case obtained by means of mild synthesis conditions (room temperature, water as a solvent, etc.).
- Working conditions of the coatings at room temperature, which prevent the possible oxidation of the substrate in the event that it is a metal substrate.
- Use of an immersion system to carry out the application of the coatings, preventing high costs of equipment such as CVD, PVD, spray pyrolysis, etc.
- Possibility of coating large surfaces unlike equipments such as CVD, PVD, spray pyrolysis, etc.

In all the cases, the process of the invention allows gaining in productivity, reduction of the production costs and improvement of the quality of the end product.

In another aspect, the invention provides a substrate coated with the coating obtained by means of the previously described process. In a particular embodiment, said substrate is a metal substrate selected from a metal and a metal alloy. In a preferred embodiment, the metal substrate is a stainless steel substrate. In another particular embodiment, said substrate is a glass substrate.

The following examples illustrate the invention and must not be considered as limiting the scope thereof.

### EXAMPLE 1

Preparation of a photocatalytic coating on stainless steel which comprises synthetic titanium dioxide nanoparticles and silicon dioxide nanoparticles functionalized with an amine group

### Description of the starting compounds

The chemical components used to prepare this photocatalytic coating were: (3-glycidyloxypropyl)trimethoxysilane (GLYMO), isopropanol (ⁱPrOH), distilled water, hydrochloric acid (HCl), ammonium hydroxide (NH₄OH), titanium tetrakis (isopropoxide), tetraethoxyxilane (TEOS) and aminopropylethoxysilane (APTES).

An aqueous suspension of synthetic TiO₂ nanoparticles was prepared, for which a solution of HCl (0.5 ml, 15.6 mmol) in 50 ml of water at a temperature of 50ºC was prepared. Titanium tetrakis (isopropoxide) (7.7 ml, 26 mmol) at 50ºC was then added, a white precipitate being generated, which was gradually peptized to give rise to a translucent suspension of TiO₂ nanoparticles after 48 hours.

On the other hand, a solution of SiO₂ nanoparticles functionalized with aminopropyl groups (STOGA) was prepared by means of the reaction of tetraethoxyxilane (TEOS) and aminopropylethoxysilane (APTES) according to the process described in WO 2010/076344.

10 ml of GLYMO were dissolved in 180 ml of isopropanol and 2.5 ml of distilled water, at room temperature and with stirring, were added. The previously prepared aqueous suspension of synthetic TiO₂ nanoparticles was then added. Subsequently, 4.3 ml of the previously prepared solution of SiO₂ nanoparticles with aminopropyl groups were added. The mixture was basified with NH₄OH and left to react for 30 minutes. After that time, an application by immersion on a stainless steel plate was performed at an immersion/emersion speed of 20 cm/min. Finally, the [coating + substrate] assembly was left to cure at 166ºC for 1 minute.

### Characterization of the coating

### Adhesion

An adhesion test was performed by means of the ASTM D3359 Standard. The adhesion of the coating obtained was very good, 5B, according to the classification of the standard.

### Homogeneity and uniformity

The homogeneity and uniformity of the coating of the invention were characterized by field emission scanning electron microscopy (FE-SEM) and by energy-dispersive X-ray (EDAX) microanalysis.

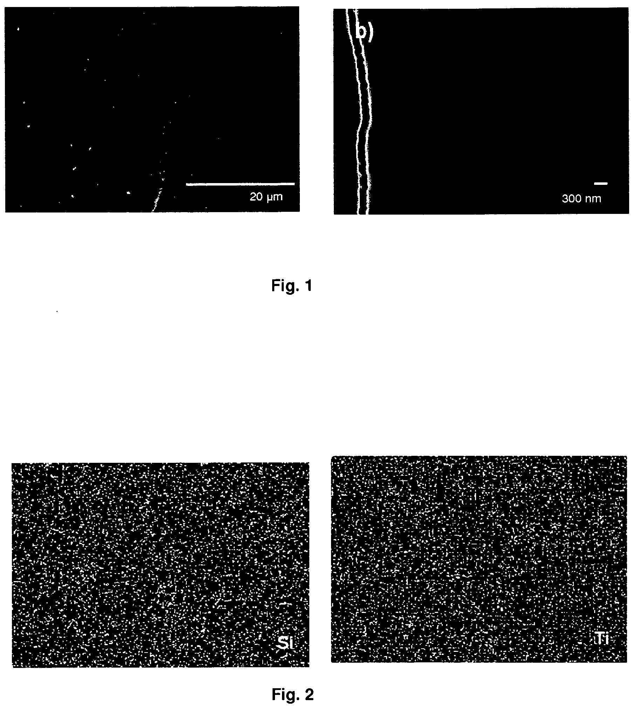

Figure 1 shows the FE-SEM image obtained at different resolutions, in which it is observed that the coating obtained has a good homogeneity, despite having some crack on its surface.

Figure 2 shows the EDAX image obtained in which it is observed that the coating obtained also has a uniform silicon and titanium distribution.

### Photocatalytic activity

The photocatalytic activity was determined by means of the Methylene Blue test according to the JIS 1703-2:2007 (or DIN52980) standard.

To evaluate the photoactivity of the coating, absorption measurements were taken in a UV/Vis spectrophotometer, at time zero (prior to the exposure to UV light) and at different time intervals (20, 40, 60, 80, 100, 120, 140, 160, 180 and 200 minutes). From the absorption values obtained, and taking into account the starting concentration of the methylene blue solution, the concentrations of methylene blue at the different times were calculated for the purpose of obtaining the degradation efficiency of the coating, which was 8%, comparable to that of the commercial coating on glass, Pilkington Activ™, which is 13%.

### Optical properties

Transmittance measurements of the coating obtained were taken to evaluate its transparency. To that end, the previous coating was applied (under the same synthesis conditions) on a glass plate.

It was thus determined that the transmittance of the coating was virtually the same as that of glass. It can thus be concluded that the coating obtained is transparent.

### EXAMPLE 2

Preparation of a photocatalytic coating on stainless steel which comprises commercial titanium dioxide nanoparticles and silicon dioxide nanoparticles functionalized with an amine group.

### Description of the starting compounds

The chemical components used to prepare this photocatalytic coating were: (3-glycidyloxypropyl)trimethoxysilane (GLYMO), isopropanol (ⁱPrOH), distilled water, hydrochloric acid (HCl), ammonium hydroxide (NH₄OH), commercial TiO₂ nanoparticles (TiO₂ P25, Degussa), tetraethoxyxilane (TEOS) and aminopropylethoxysilane (APTES).

An aqueous suspension of commercial TiO₂ nanoparticles was prepared, for which a solution of 15.7 g of P25 TiO₂ nanoparticles in distilled water (50 ml) acidified with HCl to pH ∼ 2, followed by a treatment with an ultrasound probe for 30 minutes, was prepared.

On the other hand, a solution of SiO₂ nanoparticles functionalized with aminopropyl groups (STOGA) was prepared as described in Example 1, from which the solvent was removed by means of centrifugation to obtain SiO₂ nanoparticles functionalized with aminopropyl groups in the form of powder.

10 ml of GLYMO were dissolved in 180 ml of isopropanol and 2.5 ml of distilled water, at room temperature and with stirring, were added. The previously prepared aqueous suspension of commercial TiO₂ nanoparticles was then added. Subsequently, 27 mg of powdered SiO₂ nanoparticles functionalized with aminopropyl groups were added and the mixture was left to react for 30 minutes. After that time, an application by immersion on a stainless steel plate was performed at an immersion/emersion speed of 20 cm/min. Finally, the [coating + substrate] assembly was left to cure at 166ºC for 1 minute.

### Characterization of the coating

### Adhesion

An adhesion test was performed by means of the ASTM D3359 standard. The adhesion of the coating obtained was excellent, 5B, according to the classification of the standard.

### Homogeneity and uniformity

The homogeneity and uniformity of the coating of the invention were characterized by field emission scanning electron microscopy (FE-SEM) and by energy-dispersive X-ray (EDAX) microanalysis.

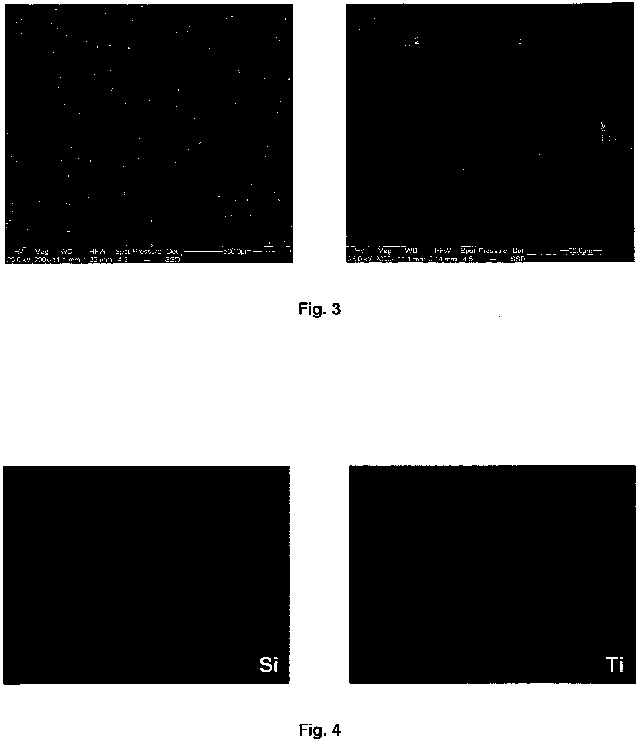

Figure 3 shows the FE-SEM image obtained at a resolution of 500 and 20 µm, in which it is observed that the coating obtained has a good homogeneity.

Figure 4 shows the EDAX image obtained in which it is observed that the coating has a uniform silicon and titanium distribution.

### Photocatalytic activity

The photocatalytic activity was determined by means of the Methylene Blue test according to the JIS 1703-2:2007 (or DIN52980) standard.

A very good methylene blue degradation efficiency was obtained by the coating, on the order of 47%.

### Optical properties

The coating obtained is translucent.

### EXAMPLE 3

Preparation of a photocatalytic coating on stainless steel which comprises commercial titanium dioxide nanoparticles and silicon dioxide nanoparticles functionalized with an amine group

### Description of the starting compounds

The chemical components used to prepare this photocatalytic coating by means of the process of the invention were: (3-trimethoxysilyl)propyl methacrylate (MSMA), isopropanol (ⁱPrOH), distilled water, hydrochloric acid (HCl), ammonium hydroxide (NH₄OH), commercial TiO₂ nanoparticles (TiO₂ P90, Degussa), tetraethoxyxilane (TEOS) and aminopropylethoxysilane (APTES).

An aqueous suspension of commercial TiO₂ nanoparticles was prepared, for which a solution of P90 TiO₂ nanoparticles in distilled water (50 ml) acidified with HCl to pH ∼ 2, followed by a treatment with an ultrasound probe for 30 minutes, was prepared.

On the other hand, powdered SiO₂ nanoparticles functionalized with aminopropyl groups were prepared as described in Example 2.

10.75 ml of MSMA were dissolved in 180 ml of isopropanol and 2.4 ml of distilled water, at room temperature and with stirring, were added. The previously prepared aqueous suspension of commercial TiO₂ nanoparticles was then added to obtain 7% of weight with respect to the total weight. Subsequently, 27 mg of powdered SiO₂ nanoparticles functionalized with aminopropyl groups were added and the mixture was left to react for 30 minutes. After that time, an application by immersion on a stainless steel plate was performed at an immersion/emersion speed of 20 cm/min. Finally, the [coating + substrate] assembly was left to cure under an ultraviolet light lamp (20 W, maximum wavelength 365 nm) for 24 hours.

### Characterization of the coating

### Adhesion

An adhesion test was performed by means of the ASTM D3359 standard. The adhesion of the coating obtained was very good, 5B, according to the classification of the standard.

### Homogeneity and uniformity

The homogeneity and uniformity of the coating of the invention were characterized by environmental scanning electron microscopy (E-SEM) and by energy-dispersive X-ray (EDAX) microanalysis.

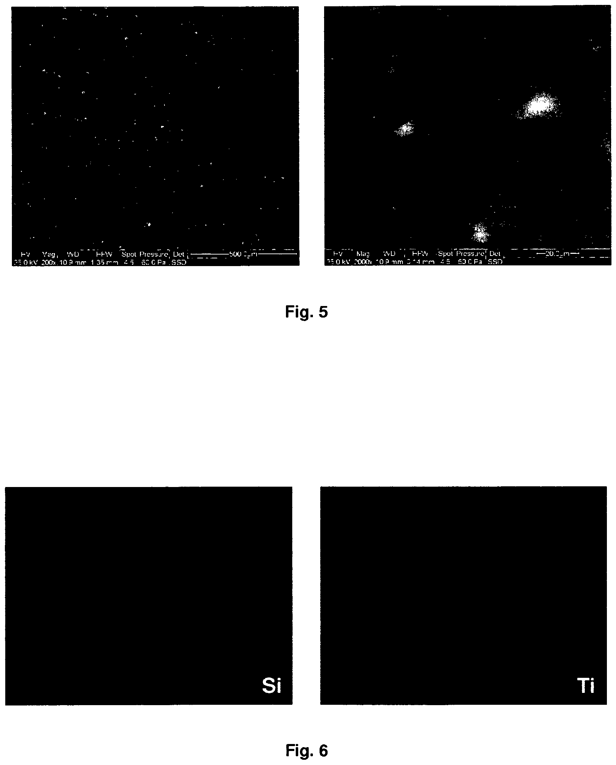

Figure 5 shows the E-SEM images obtained at a resolution of 500 and 20 µm respectively, in which it is observed that the coating has an acceptable homogeneity despite the presence of some bald spots therein.

Figure 6 shows the EDAX image obtained, in which it is observed that the coating obtained has a uniform silicon and titanium distribution.

### Photocatalytic activity

The photocatalytic activity was determined by means of the Methylene Blue test according to the JIS 1703-2:2007 (or DIN52980) standard.

A good methylene blue degradation efficiency was obtained by the coating, which was on the order of 31 %.

### Optical properties

The coating obtained is translucent.

### EXAMPLE 4

Preparation of a photocatalytic coating on glass which comprises synthetic titanium dioxide nanoparticles and titanium dioxide nanoparticles functionalized with an amine group

### Description of the starting compounds

The chemical compounds used to prepare this photocatalytic coating are: (3-glycidyloxypropyl)trimethoxysilane (GLYMO), 3-aminopropyltriethoxysilane (APTES), isopropanol ('PrOH), distilled water, ammonium hydroxide (NH₄OH), titanium tetrakis (isopropoxide) and hydrochloric acid (HCl).

Titanium dioxide nanoparticles functionalized with aminopropyl groups (TIGANDI) were prepared starting from 38 ml of a suspension of synthetic TiO2 nanoparticles obtained by means of the process described in Example 1, to which 0.3 ml of 3-aminopropyltriethoxysilane were added. The reaction was carried out at 100ºC for 12 hours. It was then left stirring at room temperature for 3 days.

1 ml of GLYMO was dissolved in 18 ml of isopropanol and 0.25 ml of distilled water, at room temperature and with stirring, were added. Then, 5 ml of the suspension of synthetic TiO₂ nanoparticles obtained according to Example 1 and 2.7 mg of the TiO₂ nanoparticles functionalized with aminopropyl (TIGANDI), prepared as has been previously described, were then added, obtaining 1.3% by weight with respect to the total weight. The mixture was basified with ammonium hydroxide until reaching pH 10 and was left to react for 30 minutes. After that time, an application by immersion on a glass plate was performed at an immersion/emersion speed of 20 cm/min. Finally, the [coating + substrate] assembly was left to cure at 170ºC for 30 minutes.

### Characterization of the coating

### Adhesion

An adhesion test was performed by means of the ASTM D3359 standard. The adhesion of the coating obtained was very good, 5B, according to the classification of the standard.

### Homogeneity and uniformity

The homogeneity and uniformity of the coating of the invention were characterized by environmental scanning electron microscopy (E-SEM) and by energy-dispersive X-ray (EDAX) microanalysis.

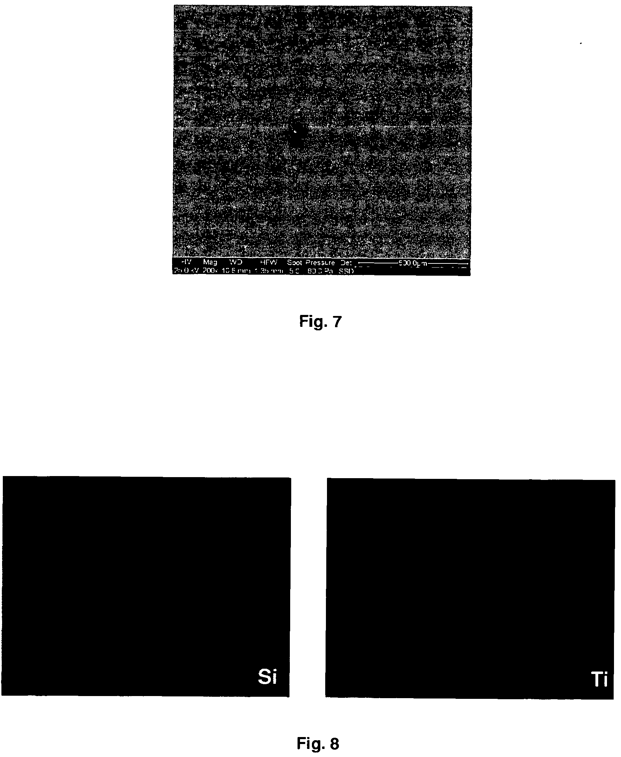

Figure 7 shows the E-SEM image obtained at a resolution of 500 µm, in which it is observed that the coating obtained has a high homogeneity except for some isolated agglomerates.

Figure 8 shows the EDAX image obtained, in which it is observed that the silicon distribution is homogeneous, like the titanium distribution, and in which almost no agglomerates are observed.

### Photocatalytic activity

The photocatalytic activity was determined by means of the Methylene Blue test according to the JIS 1703-2:2007 (or DIN52980) standard.

An acceptable methylene blue degradation efficiency was obtained by the coating, on the order of 11%.

### Optical properties

The coating obtained is transparent.

### EXAMPLE 5

Preparation of a photocatalytic coating on glass which comprises synthetic titanium dioxide nanoparticles, titanium dioxide nanoparticles functionalized with an amine group and titanium dioxide nanoparticles functionalized with an acid group

### Description of the starting compounds

The chemical compounds used to prepare this photocatalytic coating are: (3-glycidyloxypropyl)trimethoxysilane (GLYMO), 3-aminopropyltriethoxysilane (APTES), 3-cyanopropyltriethoxysilane (CPTES), isopropanol (ⁱPrOH), distilled water, ammonium hydroxide (NH₄OH), titanium tetrakis (isopropoxide) and hydrochloric acid (HCl).

Titanium dioxide nanoparticles functionalized with aminopropyl groups (TIGANDI) were prepared as described in Example 4. Likewise, titanium dioxide nanoparticles functionalized with carboxypropyl groups (TIACID) were prepared in a similar manner, although using 3-cyanopropyltriethoxysilane (CPTES) instead of 3-aminopropyltriethoxysilane (APTES), for the purpose of obtaining titanium dioxide nanoparticles functionalized with cyanopropyl groups which were then dispersed in a solution of H₂SO₄ (50% in distilled water). Said dispersion was left for 12 hours at 145ºC. The resulting mixture was centrifuged and washed twice with H₂O, thus obtaining a white powder.

250 mg of TIACID TiO₂ nanoparticles were dispersed in 18 ml of isopropanol. Then, 0.5 ml of GLYMO and 0.25 ml of distilled water were then added at room temperature, with stirring. Then, 5 ml of the synthetic TiO₂ nanoparticles and 2.7 mg of the TIGANDI TiO₂ nanoparticles were added, obtaining 3.4% by weight with respect to the total weight. The mixture was basified with ammonium hydroxide until reaching pH 10 and was left to react for 30 minutes. After that time. an application by immersion on a glass plate was performed at an immersion/emersion speed of 20 cm/min. Finally, the [coating + substrate] assembly was left to cure at 170ºC for 30 minutes.

### Characterization of the coating

### Adhesion

An adhesion test was performed by means of the ASTM D3359 standard. The adhesion of the coating obtained was very good, 5B, according to the classification of the standard.

### Homogeneity and uniformity

The homogeneity and uniformity of the coating of the invention were characterized by environmental scanning electron microscopy (E-SEM) and by energy-dispersive X-ray (EDAX) microanalysis.

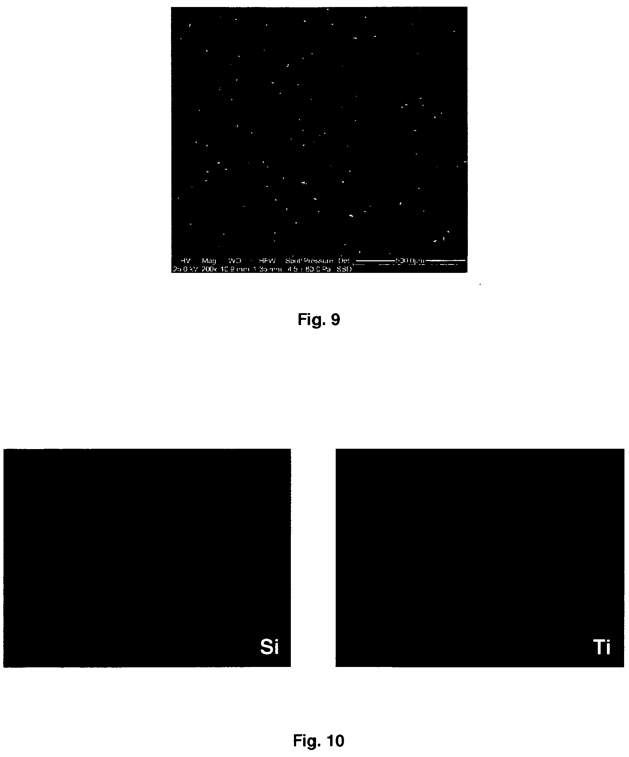

Figure 9 shows the E-SEM image obtained at a resolution of 500 µm, in which it is observed that the coating obtained has a high homogeneity although some agglomerates, most probably corresponding to TiO₂, can be seen.

Figure 10 shows the EDAX image obtained, in which it is observed that the silicon distribution is quite uniform and only some bald spots complemented with the figure of titanium, which shows small agglomerates corresponding to TiO₂ particles, is observed.

### Photocatalytic activity

The photocatalytic activity was determined by means of the Methylene Blue test according to the JIS 1703-2:2007 (or DIN52980) standard.

An acceptable methylene blue degradation efficiency was obtained by the coating, on the order of 14%.

### Optical properties

The coating obtained is translucent.

### EXAMPLE 6

Preparation of a photocatalytic coating on glass which comprises commercial titanium dioxide nanoparticles, titanium dioxide nanoparticles functionalized with an amine group and titanium dioxide nanoparticles functionalized with an acid group

### Description of the starting compounds

The chemical compounds used to prepare this photocatalytic coating are: (3-glycidyloxypropyl)trimethoxysilane (GLYMO), 3-aminopropyltriethoxysilane (APTES), 3-cyanopropyltriethoxysilane (CPTES), isopropanol ('PrOH), distilled water, ammonium hydroxide (NH₄OH), titanium tetrakis (isopropoxide), hydrochloric acid (HCl) and commercial P25 TiO₂ nanoparticle (Degussa).

Titanium dioxide nanoparticles functionalized with aminopropyl groups (TIGANDI) and titanium dioxide nanoparticles functionalized with carboxypropyl groups (TIACID) were prepared as described in Example 5.

100 mg of TIACID TiO₂ nanoparticles were dispersed in 18 ml of isopropanol and 0.25 ml of GLYMO and 0.25 ml of distilled water at room temperature, with stirring, were then added. Commercial powdered TiO₂ nanoparticles (P25 TiO₂, Degussa) and 2.7 mg of the TIGANDI TiO₂ nanoparticles were then added, obtaining 2.1% by weight with respect to the total weight. The mixture was basified with ammonium hydroxide until reaching pH 10 and was left to react for 30 minutes. After that time, an application by immersion on a glass plate was performed at an immersion/emersion speed of 20 cm/min. Finally, the [coating + substrate] assembly was left to cure at 170ºC for 30 minutes.

### Characterization of the coating

### Adhesion

An adhesion assay was performed by means of the ASTM D3359 standard. The adhesion of the coating obtained was very good, 5B, according to the classification of the standard.

### Homogeneity and uniformity

The homogeneity and uniformity of the coating of the invention were characterized by environmental scanning electron microscopy (E-SEM) and by energy-dispersive X-ray (EDAX) microanalysis.

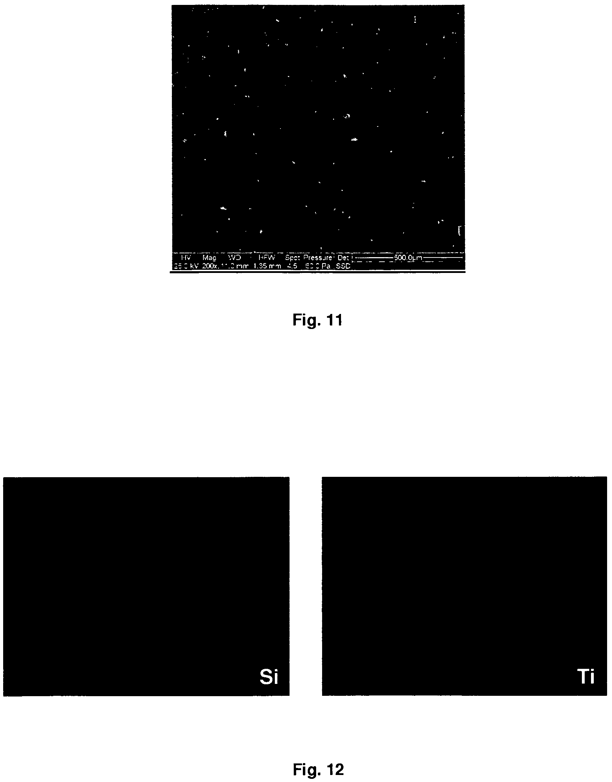

Figure 11 shows the E-SEM image obtained at a resolution of 500 µm, in which it is observed that the coating obtained has an acceptable homogeneity, although with some agglomerates.

Figure 12 shows the EDAX image obtained, in which it is observed that the silicon distribution is quire uniform and only some bald spots due to the small titanium agglomerates is observed.

### Photocatalytic activity

The photocatalytic activity was determined by means of the Methylene Blue test according to the JIS 1703-2:2007 (or DIN52980) standard.

An excellent methylene blue degradation efficiency was obtained by the coating, on the order of 43%.

### Optical properties

The coating obtained is translucent.

### EXAMPLE 7

Preparation of a photocatalytic coating on glass which comprises synthetic titanium dioxide nanoparticles, titanium dioxide nanoparticles functionalized with a methacrylate group

### Description of the starting compounds

The chemical compounds used to prepare this photocatalytic coating are: isopropanol (ⁱPrOH), distilled water, titanium tetrakis (isopropoxide), hydrochloric acid (HCl), 3-(trimethoxysilylpropyl)methacrylate (MSMA) and Degussa P25 synthetic TiO₂ nanoparticles

Titanium dioxide nanoparticles functionalized with a methacryloxypropyl group (TIMETA) were prepared according to the method for preparing the titanium dioxide nanoparticles functionalized with aminopropyl groups (TIGANDI) described in Example 4, using 3-(trimethoxysilylpropyl)methacrylate (MSMA) instead of 3-aminopropylsilane (APTES).

1 ml of TIMETA TiO₂ nanoparticles was dispersed in 18 ml of isopropanol. Then, 0.25 ml of distilled water at room temperature, with stirring, and 5 ml of the suspension of synthetic TiO₂ nanoparticles obtained according to Example 1 were added, obtaining 1.7% by weight with respect to the total weight. The mixture was left to react for 30 minutes. After that time, an application by immersion on a glass plate was performed at an immersion/emersion speed of 20 cm/min. Finally, the [coating + substrate] assembly was left to cure at 105ºC for 1 hour.

### Characterization of the coating

### Adhesion

An adhesion test was performed by means of the ASTM D3359 standard. The adhesion of the coating obtained was very good, 5B, according to the classification of the standard.

### Homogeneity and uniformity

The homogeneity and uniformity of the coating of the invention were characterized by environmental scanning electron microscopy (E-SEM) and by energy-dispersive X-ray (EDAX) microanalysis.

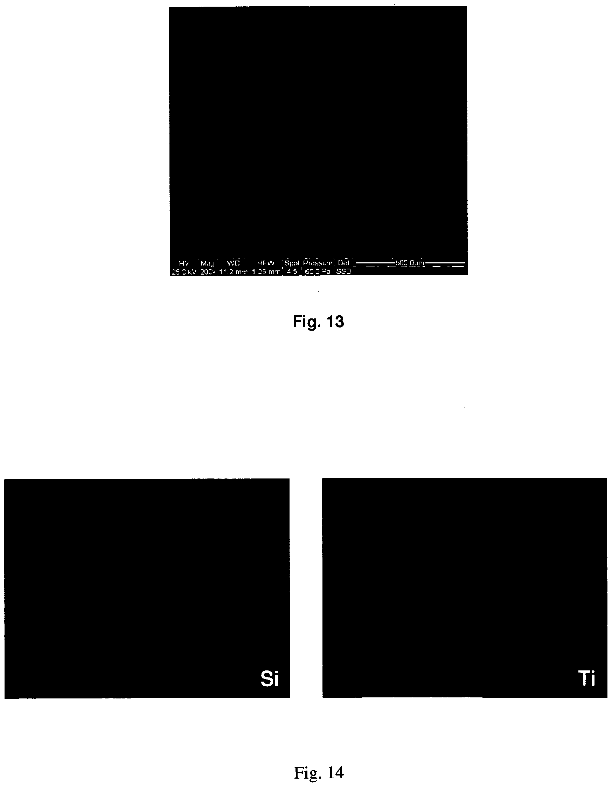

Figure 13 shows the E-SEM image obtained at a resolution of 500 µm, in which it is observed that the coating obtained has a high homogeneity and only some small-sized agglomerates.

Figure 14 shows the EDAX image obtained, in which it is observed that the titanium and silicon distributions have a good homogeneity for the entire surface. Some areas in which the concentration of TiO₂ is slightly higher, but conserving the uniformity, can only be seen in the image corresponding to titanium.

### Photocatalytic activity

The photocatalytic activity was determined by means of the Methylene Blue test according to the JIS 1703-2:2007 (or DIN52980) standard.

An acceptable methylene blue degradation efficiency was obtained by the coating, on the order of 8.4%.

### Optical properties

The coating obtained is transparent.

## Claims

1. Photocatalytic coating comprising titanium dioxide nanoparticles and nanoparticles of an inorganic oxide functionalized with a functional group selected from amine, methacrylate, cyano, acid, isocyanate and alcohol.

2. Coating according to claim 1, **characterized in that** it comprises titanium dioxide nanoparticles and silicon dioxide nanoparticles functionalized with an amine group.

3. Coating according to claim 1, **characterized in that** it comprises titanium dioxide nanoparticles and titanium dioxide nanoparticles functionalized with an amine group.

4. Coating according to claim 1, **characterized in that** it comprises titanium dioxide nanoparticles and titanium dioxide nanoparticles functionalized with a methacrylate group.

5. Coating according to claim 1, **characterized in that** it comprises titanium dioxide nanoparticles and titanium dioxide nanoparticles functionalized with a cyano group.

6. Coating according to claim 1, **characterized in that** it comprises titanium dioxide nanoparticles and titanium dioxide nanoparticles functionalized with an acid group.

7. Process for applying a photocatalytic coating according to any one of claims 1-6 on a substrate, **characterized in that** it comprises the steps of:
(a) preparing a photocatalytic composition which comprises mixing the titanium dioxide nanoparticles and the nanoparticles of an inorganic oxide functionalized with a functional group selected from amine, methacrylate, cyano, acid, isocyanate and alcohol;
(b) coating the substrate with the composition obtained in (a); and
(c) subjecting the coated substrate to a curing treatment.

8. Process according to claim 7, **characterized in that** step (a) comprises previously obtaining the inorganic oxide nanoparticles functionalized with a functional group selected from amine, methacrylate, cyano, acid, isocyanate and alcohol by means of a process which comprises preparing the nanoparticles of the inorganic oxide and then reacting them with an organosilane containing a functional group selected from amine, methacrylate, cyano, acid, isocyanate and alcohol.

9. Process according to claim 8, **characterized in that** the silicon dioxide nanoparticles functionalized with an amine group are obtained by means of a process which comprises preparing the silicon dioxide nanoparticles; and then reacting them with an organosilane containing an amine functional group.

10. Process according to claim 8, **characterized in that** the titanium dioxide nanoparticles functionalized with an amine group are obtained by means of a process which comprises preparing the titanium dioxide nanoparticles; and then reacting them with an organosilane containing an amine functional group.

11. Process according to claim 8, **characterized in that** the titanium dioxide nanoparticles functionalized with a methacrylate group are obtained by means of a process which comprises preparing the titanium dioxide nanoparticles; and then reacting them with an organosilane containing a methacrylate functional group.

12. Process according to claim 8, **characterized in that** the titanium dioxide nanoparticles functionalized with a cyano group are obtained by means of a process which comprises preparing the titanium dioxide nanoparticles; then reacting them with an organosilane containing a cyano functional group.

13. Process according to claim 8, **characterized in that** the titanium dioxide nanoparticles functionalized with an acid group are obtained by means of a process which comprises preparing the titanium dioxide nanoparticles; then reacting them with an organosilane containing a cyano functional group to obtain titanium dioxide nanoparticles functionalized with a cyano group; and subjecting said nanoparticles to hydrolysis.

14. Use of a substrate coated with a photocatalytic coating according to any one of claims 1 to 6 in water purification, in air purification, in self-cleaning or easy cleaning of surfaces, and in biocidal surfaces.

## Patentansprüche

1. Photokatalytische Beschichtung, die Titandioxidnanopartikel und Nanopartikel aus einem anorganischen Oxid, die mit einer funktionellen Gruppe, ausgewählt aus Amin, Methacrylat, Cyano, Säure, Isocyanat und Alkohol, funktionalisiert sind, enthält.

2. Beschichtung gemäß Anspruch 1, **dadurch gekennzeichnet, dass** sie Titandioxidnanopartikel und Siliciumdioxidnanopartikel, die mit einer Amingruppe funktionalisiert sind, enthält.

3. Beschichtung gemäß Anspruch 1, **dadurch gekennzeichnet, dass** sie Titandioxidnanopartikel und Titandioxidnanopartikel, die mit einer Amingruppe funktionalisiert sind, enthält.

4. Beschichtung gemäß Anspruch 1, **dadurch gekennzeichnet, dass** sie Titandioxidnanopartikel und Titandioxidnanopartikel, die mit einer Methacrylatgruppe funktionalisiert sind, enthält.

5. Beschichtung gemäß Anspruch 1, **dadurch gekennzeichnet, dass** sie Titandioxidnanopartikel und Titandioxidnanopartikel, die mit einer Cyanogruppe funktionalisiert sind, enthält.

6. Beschichtung gemäß Anspruch 1, **dadurch gekennzeichnet, dass** sie Titandioxidnanopartikel und Titandioxidnanopartikel, die mit einer Säuregruppe funktionalisiert sind, enthält.

7. Verfahren zur Aufbringung einer photokatalytischen Beschichtung gemäß einem der Ansprüche 1 bis 6 auf ein Substrat, **dadurch gekennzeichnet, dass** es die Schritte umfasst:
(a) Herstellen einer photokatalytischen Zusammensetzung, umfassend Mischen der Titandioxidnanopartikel und der Nanopartikel aus einem anorganischen Oxid, die mit einer funktionellen Gruppe, ausgewählt aus Amin, Methacrylat, Cyano, Säure, Isocyanat und Alkohol, funktionalisiert sind;
(b) Beschichten des Substrats mit der Zusammensetzung, die in (a) erhalten wurde, und
(c) Aussetzen des beschichteten Substrats an eine Härtungsbehandlung.

8. Verfahren gemäß Anspruch 7, **dadurch gekennzeichnet, dass** Schritt (a) zuvor das Erhalten der anorganischen Oxidnanopartikel, die mit einer funktionellen Gruppe, ausgewählt aus Amin, Methacrylat, Cyano, Säure, Isocyanat und Alkohol, funktionalisiert sind, mithilfe eines Verfahrens, das Herstellen der Nanopartikel aus dem anorganischen Oxid und dann Umsetzen dieser mit einem Organosilan, das eine funktionelle Gruppe, ausgewählt aus Amin, Methacrylat, Cyano, Säure, Isocyanat und Alkohol, enthält, umfasst.

9. Verfahren gemäß Anspruch 8, **dadurch gekennzeichnet, dass** die Siliciumdioxidnanopartikel, die mit einer Amingruppe funktionalisiert sind, mithilfe eines Verfahrens erhalten werden, das Herstellen der Siliciumdioxidnanopartikel und dann Umsetzen dieser mit einem Organosilan, das eine aminfunktionelle Gruppe enthält, umfasst.

10. Verfahren gemäß Anspruch 8, **dadurch gekennzeichnet, dass** die Titandioxidnanopartikel, die mit einer Amingruppe funktionalisiert sind, mithilfe eines Verfahrens erhalten werden, das Herstellen der Titandioxidnanopartikel und dann Umsetzen dieser mit einem Organosilan, das eine aminfunktionelle Gruppe enthält, umfasst.

11. Verfahren gemäß Anspruch 8, **dadurch gekennzeichnet, dass** die Titandioxidnanopartikel, die mit einer Methacrylatgruppe funktionalisiert sind, mithilfe eines Verfahrens erhalten werden, das Herstellen der Titandioxidnanopartikel und dann Umsetzen dieser mit einem Organosilan, das eine methacrylatfunktionelle Gruppe enthält, umfasst.

12. Verfahren gemäß Anspruch 8, **dadurch gekennzeichnet, dass** die Titandioxidnanopartikel, die mit einer Cyanogruppe funktionalisiert sind, mithilfe eines Verfahrens erhalten werden, das Herstellen der Titandioxidnanopartikel, dann Umsetzen dieser mit einem Organosilan, das eine cyanofunktionelle Gruppe enthält, umfasst.

13. Verfahren gemäß Anspruch 8, **dadurch gekennzeichnet, dass** die Titandioxidnanopartikel, die mit einer Säuregruppe funktionalisiert sind, mithilfe eines Verfahrens erhalten werden, das Herstellen der Titandioxidnanopartikel, dann Umsetzen dieser mit einem Organosilan, das eine cyanofunktionelle Gruppe enthält, und Aussetzen dieser Nanopartikel an Hydrolyse umfasst.

14. Verwendung eines Substrats, das mit einer photokatalytischen Beschichtung gemäß einem der Ansprüche 1 bis 6 beschichtet ist, bei der Wasserreinigung, bei der Luftreinigung, bei der Selbstreinigung oder leichten Reinigung von Oberflächen und in bioziden Oberflächen.

## Revendications

1. Revêtement photocatalytique comprenant des nanoparticules de dioxyde de titane et des nanoparticules d'un oxyde inorganique fonctionnalisées avec un groupe fonctionnel sélectionné parmi des groupes amine, méthacrylate, cyano, acide, isocyanate et alcool.

2. Revêtement selon la revendication 1, **caractérisé en ce qu'**il comprend des nanoparticules de dioxyde de titane et des nanoparticules de dioxyde de silicium fonctionnalisées avec un groupe amine.

3. Revêtement selon la revendication 1, **caractérisé en ce qu'**il comprend des nanoparticules de dioxyde de titane et des nanoparticules de dioxyde de titane fonctionnalisées avec un groupe amine.

4. Revêtement selon la revendication 1, **caractérisé en ce qu'**il comprend des nanoparticules de dioxyde de titane et des nanoparticules de dioxyde de titane fonctionnalisées avec un groupe méthacrylate.

5. Revêtement selon la revendication 1, **caractérisé en ce qu'**il comprend des nanoparticules de dioxyde de titane et des nanoparticules de dioxyde de titane fonctionnalisées avec un groupe cyano.

6. Revêtement selon la revendication 1, **caractérisé en ce qu'**il comprend des nanoparticules de dioxyde de titane et des nanoparticules de dioxyde de titane fonctionnalisées avec un groupe acide.

7. Procédé d'application d'un revêtement photocatalytique selon l'une quelconque des revendications 1 à 6 sur un substrat, **caractérisé en ce qu'**il comprend les étapes qui consistent à :
(a) préparer une composition photocatalytique, comprenant le mélange des nanoparticules de dioxyde de titane et des nanoparticules d'un oxyde inorganique fonctionnalisées avec un groupe fonctionnel sélectionné parmi des groupes amine, méthacrylate, cyano, acide, isocyanate et alcool ;
(b) revêtir le substrat avec la composition obtenue dans (a) ; et
(c) soumettre le substrat revêtu à un traitement de durcissement.

8. Procédé selon la revendication 7, **caractérisé en ce que** l'étape (a) comprend l'obtention au préalable des nanoparticules d'oxyde inorganique fonctionnalisées avec un groupe fonctionnel sélectionné parmi des groupes amine, méthacrylate, cyano, acide, isocyanate et alcool au moyen d'un procédé qui comprend la préparation des nanoparticules de l'oxyde inorganique, en les faisant réagir ensuite avec un organosilane contenant un groupe fonctionnel sélectionné parmi des groupes amine, méthacrylate, cyano, acide, isocyanate et alcool.

9. Procédé selon la revendication 8, **caractérisé en ce que** les nanoparticules de dioxyde de silicium fonctionnalisées avec un groupe amine sont obtenues au moyen d'un procédé qui comprend la préparation des nanoparticules de dioxyde de silicium, en les faisant réagir ensuite avec un organosilane contenant un groupe fonctionnel amine.

10. Procédé selon la revendication 8, **caractérisé en ce que** les nanoparticules de dioxyde de titane fonctionnalisées avec un groupe amine sont obtenues au moyen d'un procédé qui comprend la préparation des nanoparticules de dioxyde de titane, en les faisant réagir ensuite avec un organosilane contenant un groupe fonctionnel amine.

11. Procédé selon la revendication 8, **caractérisé en ce que** les nanoparticules de dioxyde de titane fonctionnalisées avec un groupe méthacrylate sont obtenues au moyen d'un procédé qui comprend la préparation des nanoparticules de dioxyde de titane, en les faisant réagir ensuite avec un organosilane contenant un groupe fonctionnel méthacrylate.

12. Procédé selon la revendication 8, **caractérisé en ce que** les nanoparticules de dioxyde de titane fonctionnalisées avec un groupe cyano sont obtenues au moyen d'un procédé qui comprend la préparation des nanoparticules de dioxyde de titane, en les faisant réagir ensuite avec un organosilane contenant un groupe fonctionnel cyano.

13. Procédé selon la revendication 8, **caractérisé en ce que** les nanoparticules de dioxyde de titane fonctionnalisées avec un groupe acide sont obtenues au moyen d'un procédé qui comprend la préparation des nanoparticules de dioxyde de titane, en les faisant réagir ensuite avec un organosilane contenant un groupe fonctionnel cyano pour obtenir des nanoparticules de dioxyde de titane fonctionnalisées avec un groupe cyano, et à soumettre lesdites nanoparticules à une hydrolyse.

14. Utilisation d'un substrat pourvu d'un revêtement photocatalytique selon l'une quelconque des revendications 1 à 6 dans des procédés de purification de l'eau, de purification de l'air, d'autonettoyage ou de nettoyage simplifié de surfaces, et dans des surfaces biocides.
